# EUROPÄISCHE PATENTSCHRIFT

(11) **EP 0 389 078 B1**
(45) Veröffentlichungstag und Bekanntmachung des Hinweises auf die Patenterteilung: **23.06.1993**
(21) Anmeldenummer: 90250076.8
(22) Anmeldetag: 19.03.1990
(51) Int. Cl.: B21D 51/24

(54) **Verfahren zur Herstellung von Druckgasflaschen**
Method of making pressurised-gas bottles
Procédé de fabrication de bouteilles à gaz sous pression

(30) Priorität: 23.03.1989 DE 3910192
(43) Veröffentlichungstag der Anmeldung: 26.09.1990
(73) Patentinhaber: MANNESMANN Aktiengesellschaft, 40027 Düsseldorf (DE)
(72) Erfinder: Lange, Ernst W., Dr.-Ing., D-4020 Mettman (DE); Majetschak, Karl-Heinz, D-4030 Ratingen (DE)
(74) Vertreter: Presting, Hans-Joachim, Dipl.-Ing.

(56) Entgegenhaltungen:
- DE-A- 2 263 586
- GB-A- 422 590
- GB-A- 1 520 538
- US-A- 1 948 437
- BANDER, BLECHE, ROHRE. vol. 11, no. 10, 1970, WURZBURG DE, Seiten 516-523; LUDWIG: "Herstellung von Druckgasflaschen"

## Beschreibung

Die Erfindung betrifft ein Verfahren zur Herstellung von Druckgasflaschen gemäß dem Gattungsbegriff des Hauptanspruches.

Druckgasflaschen zur Speicherung und Entnahme von Edel-, Spezialgasen oder Gasgemischen werden nach verschiedenen Verfahren hergestellt, wobei die Unterschiede in der Art des Ausgangsproduktes und der anschließenden Umformtechnik liegen. Eines der bekannten Herstellverfahren (siehe Prospekt MRW 1987) besteht darin, daß ausgehend von einem warmgefertigten Rohr durch Ablängen einzelne Rohrabschnitte erzeugt und diese über eine Warmumformung in beiden Endbereichen zu einem geschlossenen Behälter umgeformt und nach der Wärmebehandlung der Halsbereich zur Aufnahme eines Ventils bearbeitet wird und die fertige Flasche einer Endabnahmeprüfung bestehend aus einer Gewichts- und Volumenbestimmung, einer Wasserdruck- und Gasdichtheitsprüfung unterzogen wird. Nach dem Strahlen wird die fertige Flasche innen und außen visuell geprüft und anschließend die Außenoberfläche beschichtet.

Nachteilig bei diesem Verfahren ist, daß die Ungenauigkeiten, die vom Ausgangsprodukt des warmgefertigten Rohres herrühren, d. h. große Wanddickentoleranzen, Exzentrizität und eine rauhe Oberfläche während der Herstellung der Flasche nur unwesentlich verändert werden und damit das Aussehen und die Einsatzmöglichkeit der Flasche maßgeblich bestimmen. Zwar werden durch das vor der Warmumformung durchgeführte Strahlen des Rohrabschnittes die Spitzen der rauhen Oberfläche etwas eingeebnet, aber die vom Warmprozeß herrührende Struktur bleibt trotzdem erhalten.

Zur Lösung dieses Problems ist bereits vorgeschlagen worden, statt eines warmgefertigten Rohres ein kaltgefertigtes Rohr als Ausgangsprodukt einzusetzen, das eine entsprechend platte Oberfläche und geringere Toleranzen für die Wanddicke und Exzentrizität mit sich bringt. Durch das sehr viel teuere Ausgangsmaterial wird die Flasche aber so verteuert, daß dieser Vorschlag aus Kostengründen für eine Serienfertigung nicht geeignet, sondern nur für die Herstellung einzelner für Sonderzwecke bestimmte Flaschen tragbar ist.

Bei einem anderen Verfahren (Bänder, Bleche, Rohre 11, (1970) Nr. 10, Seiten 516 - 523), das für den vorliegenden Anmeldungsgegenstand gattungsbestimmend ist, wird aus einem Rohrabschnitt durch Warmeinziehen des Bodens eine Vorform mit einem geschlossenen Boden gefertigt. In einem zweiten Arbeitsgang werden diese Vorformen in der zylindrischen Wand durch Streckdrücken reduziert, um eine Druckgasflasche zu erhalten, die mit einem dicken Boden und einer dünnen, gleichmäßigen Wand ausgebildet ist. Nachteilig bei diesem Verfahren ist, daß für das Streckdrücken insbesondere bei großen und langen Druckgasflaschen, eine aufwendige und teuere Streckdruckmaschine erforderlich ist und die Taktzeit für die Herstellung einer Flasche entsprechend lang ist, da zur Reduzierung der Wanddicke mehrere Rollenüberläufe notwending sind. Außerdem ist die beschriebene und dargestellte Abfolge der Arbeitsschritte nicht optimal im Hinblick auf die Herstellung einer zur Speicherung von Prüfgasen geeigneten Druckgasflasche, die im Hinblick auf den maximal zulässigen Fremdpartikelanteil im Prüfgas erhöhten Anforderungen genügen muß.

Aufgabe der Erfindung ist es für eine wirtschaftliche Serienfertigung von Druckgasflschen mit Inhalten größer 5 l geeignete Arbeitsschritte auszuwählen und so aufeinander abzustimmen, daß bei optimalem Fertigungsfluß eine gewichtsoptimierte Druckgasflasche mit hervorragender Oberfläche entsteht, die auch insbesondere zur Speicherung von Prüfgasen geeignet ist.

Die Aufgabe löst Herstellungsverfahren nach dem Hauptanspruch. Nicht ein einzelnes Merkmal löst die wirtschaftliche und technische Aufgabe in erfinderischer Weise, sondern nur die Kombination der ausgewählten geeigneten Arbeitsschritte bewirkt dies. Dabei ist zu berücksichtigen, daß es um die wirtschaftliche Fertigung eines Massenproduktes geht und nicht um die Herstellung bestimmter einzelner Flaschen bzw. Behälter fur Sonderzwecke.

Der Vorteil der erfindungsgemäßen Kombination von speziell ausgesuchten Verfahrensschritten und deren Verknüpfung miteinander ist darin zu sehen, daß das Ausgangsprodukt weiterhin ein preiswertes warmgefertigtes Rohr ist und die danach hergestellte Flasche eine Innenoberfläche aufweist, die für eine nachgeschaltete Konditionierung, z. B. Elektropolieren, sehr gut geeignet ist. Damit ist eine Oberflächenqualität für den größten Teil des Innenbereiches erzielbar, die auch den höhergestellten Anforderungen für empfindliche Prüfgase gerecht wird. Die Problematik des Einsatzes eines warmgefertigten Rohres zur Herstellung einer gewichtsoptimierten Druckgasflasche hinsichtlich seiner Toleranzen und Exzentrizität ist bekannt. Zur Überwindung dieser Schwierigkeit ist, wie bereits erwähnt, vorgeschlagen worden, den zylindrischen Teil der mit einem Boden versehenen Rohrhülse kalt umzuformen.

Da die Toleranzen für eine kaltgefertigte Rohrhülse geringer sind, kann im Hinblick auf eine Optimierung des Gewichtes mit der Wanddicke bis nahe an den Auslegungswert, d.h. Mindestwanddicke, herangegangen werden, ohne Gefahr zu laufen, diesen Mindestwert zu unterschreiten. In gleicher Weise werden auch die Rundheit und Exzentrizität verbessert, was nicht nur für die genaue Einhaltung des geforderten Inhaltes, sondern auch für eine Gewichtsoptimierung förderlich ist. Ferner wird durch diese Maßnahme die Volumentoleranz deutlich verbessert.

Ein weiterer Vorteil des Einsatzes eines in der Wanddicke dickeren Rohrabschnittes ist darin zu sehen, daß der Grad der Anstauchung für den Boden abgesenkt werden kann, da mehr Material für die Bodenbildung zur Verfügung steht, als ausgehend von einer vergleichsweise dünneren Wand. Diese geringere materialverdrängung kann für eine Optimierung der Bodenbildung genutzt werden.

Um nicht nur den zylindrischen Teil hinsichtlich seiner Abmessung und Oberfläche optimal zu gestalten wird erfindungsgemäß vorgeschlagen, das Bodenzentrum nach der Anformung der endgültigen Bodenkontur mechanisch zu bearbeiten. Damit die beim Schließen des Bodens unvermeidbaren Oxydteilchen möglichst aus dem Zentrum des Bodens entfernt werden, wird vorgeschlagen, diesen Bereich bei der Bodenanformung nach innen quasi herauszuquetschen und die dadurch sich bildende Stauchnase anschließend mechanisch zu entfernen. Nach dieser Bearbeitung ist das Bodenzentrum glatt und geht nahezu konturlos in den umgehenden Bodenbereich über.

Nachfolgend wird anhand eines konkreten Beispieles das erfindungsgemäße Herstellverfahren näher erläutert.

Ausgehend von einem warmfertigen Rohr mit der Nennabmessung 219,1 mm äußerer Durchmesser und einer Mittelwand von 7,5 mm soll beispielhaft eine 20 Liter Stahlflasche mit den Maßen 204 mm äußerer Durchmesser und mit einer Mindestwanddicke im zylindrischen Bereich von 5,2 mm und einer Länge von 805 mm nach dem erfindungsgemäßen verfahren hergestellt werden. Das Ausgangsmaterial wird abgelängt, so daß ein zylindrischer Rohrabschnitt mit einer Länge von 790 mm entsteht. Ohne jede weitere Vorbehandlung wird ein Ende dieses Rohrabschnittes auf einer Länge von ca. 200 - 250 mm induktiv erwärmt und dann in eine Spinningmaschine eingelegt. In dieser Maschine wird, wie bereits beschrieben, das erwärmte offene Ende unter Zuführung von Wärme mittels eines Gasstrahles unter Bildung eines Bodens verschlossen. Bei der Weitergabe zur nächsten Bearbeitungsstation kühlt sich das geschlossene Ende so stark ab, daß ein induktive Nacherwärmung erforderlich ist, um die endgültige Kontur des Bodens, z.B. ein Konkavboden mittels eines Stempels und einer Matrize anzuformen. Bei dieser Anformung wird auf der Innenseite im Bodenzentrum gezielt Material herausgequetscht, so daß eine Stauchnase entsteht. Die Entfernung dieser Stauchnase und die mechanische Bearbeitung der Innenseite des Bodens erfolgt über einen nach innen geführten Stirnfräser, dessen Kontur der gewünschten Bodenform angepaßt ist. Die so bearbeitete Rohrhülse hat dann eine Länge von 690 mm. Als Vorbehandlung für die nun folgende einstufige Kaltumformung wird die einseitig geschlossene Rohrhülse innen und außen gestrahlt mit einer Oberflächenqualität von SA 2 1/2. Das für die Kaltumformung verwendete Schmiermittel wird entweder vorher durch Pinseln oder Sprühen aufgetragen oder kurz von Beginn des Prozesses mit dazugegeben. Das Schmiermittel kann ein Öl, ein schmierfähiges Fett oder eine Emulsion sein. Als Kaltformung wird in diesem Beispiel ein Abstreckziehen gewählt, bei dem der Dorn ein entsprechend der Bodenform ausgewählten Kopf aufweist. Dieser Dorn wird in die Hülse eingeschoben und zusammen mit der Hülse durch einen Ring gestoßen. Die Abmessung der Werkzeuge werden so gewählt, daß sich eine Mindestumformung von 5% ergibt und die vorher berechnete erforderliche Streckung erreicht wird.

In diesem konkreten Beispiel wird die Rohrhülse im Durchmesser auf 204 mm und die Wanddicke auf 5,6 mm reduziert. Die Länge erhöht sich infolge der Streckung von 690 auf 897 mm. Für dieses gewählte Beispiel ergibt sich somit ein mittlerer Umformungsgrad von 30 %. Nach der Kaltumformung wird die Rohrhülse von Dorn gelöst, entweder mechanisch durch einen Abstreifer oder hydraulisch mit einem eine durchgehende Zentralbohrung aufweisenden Dorn. Die Besäumung, d.h. die Ablängung des ausgefransten offenen Endes erfolgt z.B. durch Sägen, so daß sich eine Länge von 835 mm ergibt. Danach wird die Bohrhülse gereinigt, um die noch verbliebenen Schmiermittelreste zu entfernen. Das offene Ende der Bohrhülse wird vergleichbar wie beim Boden induktiv erwärmt und durch eine Spinningmaschine unter Anformung eines Halses verschlossen. Nach diesem Prozeß liegt eine Flasche mit 204 mm Außendurchmesser und 5,2 mm Mindestwand im zylindrischen Bereich und einer Länge von 805 mm vor.

Die nachfolgenden Schritte, wie Wärmebehandlung, mechanische Bearbeitung des Halsbereiches und die komplette Endprüfung unterscheiden sich nicht von dem üblichen Standardverfahren, so daß hier auf eingehende Erläuterung verzichtet werden kann.

## Patentansprüche

1. Verfahren zur Herstellung von Druckgasflaschen aus nahtlosen, durch Ablängen von warmgefertigten Rohren gewonnenen Rohrabschnitten, mit den Schritten Warmeinziehen des Bodens, Strahlen der Rohrhülse, Abstrecken der Wand des zylindrischen Teiles. Ablängen auf Genaulänge, Warmeinziehen des Halses, mechanische Bearbeitung des Halsbereiches, Wärmebehandlung sowie einer Endabnahmeprüfung gekennzeichnet durch die Kombination folgender in der Reihenfolge festgelegter Arbeitsschritte
a) Warmeinziehen des Bodens
b) Nacherwärmung des Bodenbereiches und Anformung der endgültigen Kontur des Bodens, wobei das innenliegende Bodenzentrum nach innen herausgequetscht wird, so daß eine über den umgebenden Bodenbereich hervorstehende Stauchnase entsteht
c) Mechanische Bearbeitung des Bodenzentrums durch ein drehendes nach innen eingeführtes Werkzeug, wobei die Stauchnase entfernt wird
d) Strahlen der Innen- und Außenoberfläche der Rohrhülse
e) Abstreckziehen des zylindrischen Teiles der Rohrhülse mittels eines Dornes und eines Ziehringes
f) Lösen der einseitig geschlossenen Rohrhülse vom Dorn
g) Ablängen auf Genaulänge
h) Warmeinziehen des Halses
i) Wärmebehandlung des geschlossenen Druckbehälters
j) Strahlen der Außenoberfläche
k) überprüfung der Einhaltung der Festigkeit mittels Härteprüfung, Wanddickenprüfung und Kontrolle des Behälters auf oberflächennahe, sowie tiefergehende längs- und querliegende Fehler mittels Ultraschall
l) Mechanische Bearbeitung des Halsbereiches und Aufschrumpfen eines Halsringes

2. Verfahren nach Anspruch 1,
dadurch gekennzeichnet,
daß das Bodenzentrum mittels eines eine Kontur aufweisenden Fräsers spannend bearbeitet wird.

3. Verfahren nach Anspruch 1,
dadurch gekennzeichnet,
daß als Schmiermittel eine wasserlösliche Emulsion verwendet wird.

4. Verfahren nach Anspruch 1,
dadurch gekennzeichnet,
daß die kaltumgeformte Rohrhülse hydraulisch vom Innenwerkzeug gelöst wird.

5. Verfahren nach Anspruch 1,
dadurch gekennzeichnet,
daß das Ablängen der Rohrhülse mittels eines Laserstrahles erfolgt.

## Claims

1. A method for producing pressurised gas bottles from weldless tube sections obtained by cutting hot-manufactured tubes into lengths, with the steps of hot drawing-in of the base, blasting of the tube sleeve, ironing of the wall of the cylindrical section, cutting to the exact length, hot drawing-in of the neck, machining of the neck region, heat treatment and also final inspection testing, characterised by the combination of the following operating steps which are set in their sequence
a) hot drawing-in of the base,
b) subsequent heating of the base region and forming of the final contour of the base, the inner centre of the base being squeezed out inwards so that an upset nose which projects beyond the surrounding base region is produced,
c) machining of the centre of the base by a rotating tool introduced into the interior, whereupon the upset nose is removed,
d) blasting of the inner and outer surfaces of the tube sleeve,
e) ironing of the cylindrical part of the tube sleeve by means of a mandrel and a drawing die,
f) detaching of the tube sleeve, which is closed on one side, from the mandrel,
g) cutting to the exact length,
h) hot drawing-in of the neck,
i) heat treatment of the closed pressure vessel,
j) blasting of the outer surface,
k) testing that the strength is maintained by means of hardness testing, wall thickness testing and checking the container for longitudinal and transverse faults, both close to the surface and more deeply penetrating, by means of ultrasound,
l) machining of the neck region and shrinking-on of a neck ring.

2. A method according to Claim 1, characterised in that the centre of the base is machined by cutting by means of a milling cutter which bears a contour.

3. A method according to Claim 1, characterised in that a water-soluble emulsion is used as a lubricant.

4. A method according to Claim 1, characterised in that the cold-shaped tube sleeve is detached from the inner tool hydraulically.

5. A method according to Claim 1, characterised in that the cutting of the tube sleeve into lengths takes place by means of a laser beam.

## Revendications

1. Procédé pour fabriquer des bouteilles de gaz sous pression à partir de tronçons de tube sans soudure, produits par tronçonnage de tubes fabriqués à chaud, comportant les étapes suivantes : étirage à chaud du fond, grenaillage du tube, étirage de la paroi de la partie cylindrique, mise à la longueur exacte, étirage à chaud du col, traitement mécanique de la zone du col, traitement thermique, ainsi que contrôle de fabrication final, caractérisé par la succession déterminée des étapes suivantes :
a) étirage à chaud du fond,
b) réchauffage de la zone du fond et façonnage du contour définitif du fond, le centre interne du fond étant aplati vers l'intérieur de façon à créer un talon de refoulement en saillie au-dessus de la zone environnante du fond,
c) traitement mécanique du centre du fond par un outil rotatif introduit vers l'intérieur, le talon de refoulement étant éliminé,
d) grenaillage des surfaces interne et externe du tube,
e) étirage de la partie cylindrique du tube au moyen d'un mandrin ou d'un anneau d'étirage,
f) retrait du tube fermé d'un côté du mandrin,
g) mise à la longueur exacte,
h) étirage à chaud du col,
i) traitement thermique du récipient sous pression fermé,
j) grenaillage de la surface externe,
k) contrôle de la conservation de la résistance au moyen d'un essai de dureté, d'un test d'épaisseur de paroi, et du contrôle du récipient en ce qui concerne des défauts proches de la surface, ainsi que longitudinaux et transversaux plus profonds, au moyen d'ultrasons,
l) traitement mécanique de la zone du col et frettage d'une bague de col.

2. Procédé selon la revendication 1,
caractérisé en ce que le centre du fond est usiné par enlèvement de matière au moyen d'une fraise présentant un contour.

3. Procédé selon la revendication 1,
caractérisé en ce qu'une émulsion soluble dans l'eau est utilisée comme lubrifiant.

4. Procédé selon la revendication 1,
caractérisé en ce que le tube déformé à froid est détaché hydrauliquement de l'outil interne.

5. Procédé selon la revendication 1,
caractérisé en ce que le tube est mis à longueur au moyen d'un rayon laser.
